# EUROPEAN PATENT APPLICATION

(11) **EP 4 825 795 A1**
(43) Date of publication of application: **21.10.2026**
(21) Application number: 24903944.7
(22) Date of filing: 23.10.2024
(51) Int. Cl.: C01B 17/22, C01B 17/26, C01B 17/40, H01M 10/0562

(54) **CARBON-LITHIUM COMPOUND AND METHOD OF MANUFACTURING LITHIUM SULFIDE**

(30) Priority: 14.12.2023 KR 20230182324
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: SEO, Han Seok, Pohang-si, Gyeongsangbuk-do 37835 (KR); SON, Young Geun, Pohang-si, Gyeongsangbuk-do 37669 (KR); KIM, Byoung Ju, Pohang-si, Gyeongsangbuk-do 37671 (KR); PARK, Jung Kwan, Pohang-si, Gyeongsangbuk-do 37560 (KR); KO, Young-Seon, Pohang-si, Gyeongsangbuk-do 37837 (KR); CHUNG, Garam, Seoul 05279 (KR)
(74) Representative: Zacco Sweden AB
(86) International application number: PCT/KR2024/016167
(87) International publication number: WO 2025/127377

(57) **Abstract**

The present invention relates to a carbon-lithium compound and a method for preparing lithium sulfide, wherein the carbon-lithium compound is an intermediate product for preparing lithium sulfide powder and has a pellet shape, includes an oxide, and the oxide may be 1.0% or less based on a second XRD peak value of lithium sulfide (Li₂S).

## Description

### [TECHNICAL FIELD]

The present invention relates to a method for preparing lithium sulfide, and more particularly, to a carbon-lithium compound, which is an intermediate product for preparing lithium sulfide, and a method for preparing high-quality lithium sulfide.

### [BACKGROUND ART]

Secondary batteries are widely used from small electronic devices such as mobile phones or notebook computers to large devices such as electric vehicles (EVs) or energy storage systems (ESSs). As the application fields of secondary batteries have expanded into overall areas of daily life, not only performance such as high energy density and long lifespan, but also safety has been required.

Most electrolytes conventionally used in lithium secondary batteries have been liquid electrolytes using organic solvents. However, as problems such as leakage or fire of the liquid electrolyte have occurred, strict packaging has been required, and there has been a limitation in increasing energy density to a certain level or higher due to such strict packaging. Accordingly, a need for an all-solid-state battery using an inorganic solid electrolyte, rather than an organic liquid electrolyte, has emerged.

The all-solid-state battery excludes an organic solvent such as a liquid electrolyte, and thus can safely manufacture a battery cell. In addition, since an inorganic solid electrolyte is not decomposed over a wide voltage range and has stability, there is an advantage in that high-voltage electrode materials can be utilized.

The solid electrolyte is classified into an oxide-based solid electrolyte and a sulfide-based solid electrolyte, and the sulfide-based solid electrolyte has a characteristic of higher ionic conductivity than the oxide-based solid electrolyte. A main raw material of the sulfide-based solid electrolyte is lithium sulfide (Li₂S). As methods for synthesizing lithium sulfide, a synthesis method using high-energy ball milling, a synthesis method using a wet plasma process, and wet/dry methods using lithium metal have been utilized.

Specifically, among methods for preparing lithium sulfide, carbo-thermal reduction (CTR) is a method of synthesizing lithium sulfide by heat-treating a mixed powder of carbon and lithium sulfate. The method for preparing lithium sulfide by thermally reducing the lithium sulfate has an advantage of reducing process costs, and lithium sulfide generated through the above-described reduction reaction remains in a state mixed with an excess amount of carbon powder. The lithium sulfide may be dissolved in a solvent and extracted, and after the extracted solution is dried, lithium sulfide may be finally obtained through heat treatment.

However, in the case of a thermal reduction process during a lithium sulfide preparation process, the process includes heat treatment at a high temperature using an inert gas, and oxides are easily generated after the thermal reduction process, which causes an increase in oxygen concentration of lithium sulfide, which is a final product.

Accordingly, there is a need for research to reduce oxygen concentration by controlling conditions of the thermal reduction process during the lithium sulfide preparation process.

### [DETAILED DESCRIPTION OF THE INVENTION]

### [Technical Problem]

A technical problem to be solved by the present invention is to provide a carbon-lithium compound having significantly improved impurity and oxygen contents by effectively suppressing oxides generated during thermal reduction of a mixed powder of carbon and lithium sulfide.

Another technical problem to be solved by the present invention is to provide a method for preparing lithium sulfide from the carbon-lithium compound having the above-described advantages.

### [Technical Solution]

A carbon-lithium compound according to an embodiment of the present invention is an intermediate product for preparing lithium sulfide powder having a pellet shape, includes an oxide, and the oxide may be 1.0% or less based on a second XRD peak value of lithium sulfide (Li₂S).

In an embodiment, the oxide may not include Li₂SO₄. In an embodiment, the oxide may not include Li₂CO₃. In an embodiment, the oxide may include Li₂O, and the Li₂O may be 1.0% or less based on the second XRD peak value of lithium sulfide (Li₂S).

A method for preparing lithium sulfide according to another embodiment of the present invention includes mixing and thermally reducing a carbon raw material and a lithium compound, and a carbon-lithium compound, which is a thermally reduced product, may have a pellet shape.

In an embodiment, in the step of mixing and thermally reducing the carbon raw material and the lithium compound, a ratio of the carbon raw material to the lithium compound may be 3.0 or more and 5.0 or less. In an embodiment, the step of mixing and thermally reducing the carbon raw material and the lithium compound may be performed under a vacuum atmosphere.

In an embodiment, the vacuum atmosphere may be performed under a partial pressure condition of 1 × 10⁻³ Torr to 5 Torr. In an embodiment, after the step of mixing and thermally reducing the carbon raw material and the lithium compound, the method may include filtering a solution in which the thermally reduced carbon-lithium compound and a solvent are mixed; and drying the filtrate and then heat-treating the dried filtrate. In an embodiment, in the step of mixing and thermally reducing the carbon raw material and the lithium compound, when the carbon raw material and the lithium compound are mixed, a pellet-shaped mixture having a size of 1 mm to 5.0 mm may be formed.

In an embodiment, the step of mixing and thermally reducing the carbon raw material and the lithium compound may be performed in a temperature range of 860°C to 1,100°C. In an embodiment, the carbon-lithium compound produced in the step of mixing and thermally reducing the carbon raw material and the lithium compound includes an oxide, and the oxide may be 1.0% or less based on a second XRD peak value of lithium sulfide (Li₂S). In an embodiment, the oxide includes Li₂O, and the Li₂O may be 1.0% or less based on the second XRD peak value of lithium sulfide (Li₂S). In an embodiment, the oxide may not include Li₂SO₄.

### [Advantageous Effects]

The carbon-lithium compound according to an embodiment of the present invention provides a carbon-lithium compound having significantly improved impurity and oxygen contents by effectively suppressing oxides generated during thermal reduction by controlling process conditions in a thermal reduction process during a lithium sulfide preparation process.

The method for preparing lithium sulfide according to another embodiment of the present invention provides a method for preparing lithium sulfide having significantly improved impurity and oxygen contents by controlling a mixed shape of carbon and lithium sulfate into a pellet form and controlling process conditions during thermal reduction, thereby effectively suppressing oxides generated during the thermal reduction.

### [BRIEF DESCRIPTION OF THE DRAWINGS]

FIG. 1 illustrates a pellet-shaped carbon-lithium compound obtained by pelletizing a mixed powder of a carbon-lithium compound according to an embodiment of the present invention.
FIG. 2 illustrates an XRD result graph of a carbon-lithium compound having a pellet shape according to a mixing ratio of carbon and a lithium compound according to an embodiment of the present invention.
FIG. 3 illustrates an XRD result graph of a carbon-lithium compound having a pellet shape according to a process temperature according to an embodiment of the present invention.
FIG. 4 illustrates an XRD result graph of a carbon-lithium compound having a pellet shape according to a process time according to an embodiment of the present invention.
FIGS. 5 to 7 show XRD peak values of carbon-lithium compounds according to process conditions.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense. In addition, unless otherwise specifically stated, % means wt%, and 1 ppm means 0.0001 wt%.

Hereinafter, embodiments of the present invention will be described in detail so that a person having ordinary skill in the art to which the present invention pertains can easily practice the present invention. However, the present invention may be embodied in various different forms and is not limited to the embodiments described herein.

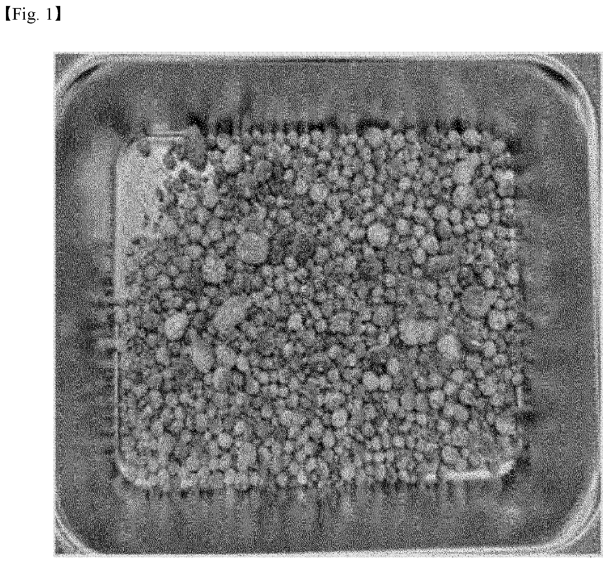

FIG. 1 illustrates a pellet-shaped carbon-lithium compound obtained by pelletizing a mixed powder of a carbon-lithium compound according to an embodiment of the present invention.

Referring to FIG. 1, the carbon-lithium compound according to an embodiment of the present invention may have a pellet shape. The pellet shape means a sphere shape. Since the carbon-lithium compound is prepared by forming a mixed powder phase into a pellet shape, there are advantages in that, during preparation of lithium sulfide, process uniformity is increased and processability is improved.

In an embodiment, the carbon-lithium compound may have a pellet shape having a size of 1 mm to 5.0 mm. Specifically, the carbon-lithium compound may have a pellet shape having a size of 0.5 mm to 5.0 mm. More specifically, the size may be 0.5 mm to 3.0 mm. The size of the pellet shape means a size measured using Vernier calipers.

When the size of the pellet shape exceeds the upper limit of the above-described range, the carbon-lithium compound is excessively aggregated, and there is a problem in that uniformity of reaction is deteriorated. When the size of the pellet shape is less than the lower limit of the above-described range, there is a problem in that the pellet shape is not maintained.

The carbon-lithium compound according to an embodiment of the present invention includes an oxide. Specifically, the carbon-lithium compound may relate to an intermediate product produced in a process of preparing lithium sulfide (Li₂S). More specifically, the intermediate product may be prepared by mixing carbon and a lithium compound and then performing a thermal reduction step. For example, the carbon-lithium compound may relate to, for example, C-Li₂S.

The carbon raw material may include, for example, at least one of soft carbon, hard carbon, petroleum coke, coal-based needle coke, coal-based pitch coke, natural graphite, and artificial graphite. The lithium compound may include at least one of lithium sulfate, lithium hydroxide, lithium oxide, and lithium carbonate. In the present embodiment, when lithium sulfate is used as the lithium compound, raw material costs are low, and thus economic efficiency of the lithium sulfide preparation process can be improved.

In an embodiment, the carbon-lithium compound may include an oxide. Specifically, the oxide may be an impurity generated during thermal reduction of a mixed powder of carbon and lithium sulfate. In an embodiment, the oxide may be an oxygen-containing material such as Li₂O.

In an embodiment, the oxide may be 1.0% or less based on a second XRD peak value of lithium sulfide (Li₂S). Specifically, the oxide may be 0.9% or less. As the second XRD peak value of lithium sulfide (Li₂S), which is a peak value clearly distinguishable from a carbon peak, the second peak value among XRD peak values of lithium sulfide (Li₂S) was confirmed.

When the ratio of the oxide satisfies the above-described range, high-purity lithium sulfide can be prepared. When the ratio of the oxide is outside the above-described range, lithium sulfide having a high impurity content is produced, and there is a problem in that it is difficult to utilize the lithium sulfide in an all-solid-state battery.

In an embodiment, the oxide may not include Li₂SO₄. The Li₂SO₄ may be a material that remains in lithium sulfide (Li₂S), increases oxygen content, and causes a problem of generating impurities during synthesis of an all-solid-state electrolyte, thereby lowering ionic conductivity. Since the oxide does not include Li₂SO₄, high-purity lithium sulfide can be provided, and there is an advantage in that the lithium sulfide can be utilized in the field of all-solid-state batteries.

The method for preparing lithium sulfide according to another embodiment of the present invention includes mixing and thermally reducing a carbon raw material and a lithium compound. Specifically, by including the step of mixing and thermally reducing the carbon raw material and the lithium compound, the above-described intermediate product of the carbon-lithium compound can be prepared, and lithium sulfide can be provided using the intermediate product. High-purity lithium sulfide (Li₂S) can be provided from the above-described intermediate product.

The step of mixing and thermally reducing the carbon raw material and the lithium compound may include a step of respectively mixing the powder-shaped carbon raw material and lithium compound, and a step of thermally reducing the mixed product. By thermally reducing the mixed powder, there is an advantage of improving uniformity of reaction as compared with conventional thermal reduction after mixing in an aqueous solution state.

The step of respectively mixing the carbon raw material and the lithium compound includes a step of pelletizing the carbon raw material and the lithium compound. Specifically, the step of pelletizing the carbon raw material and the lithium compound may be pelletizing a mixed powder obtained by mixing the carbon raw material and the lithium compound by adding water to the powder and rotating a cylindrical apparatus to cause them to aggregate with each other. By pelletizing the carbon raw material and the lithium compound, there is an advantage in that the content of oxygen-containing impurities is reduced as compared with a mixed powder state.

In an embodiment, a ratio of the content of water (mL) to the weight (g) of the powder may be 0.05 to 0.50, specifically 0.10 to 0.40, and more specifically 0.20 to 0.30. As the powder and water are mixed at the above-described ratio, pelletization of the carbon raw material and the lithium compound can be easily performed.

In the step of respectively mixing the carbon raw material and the lithium compound, a ratio of the carbon raw material to the lithium compound may be 3.0 or more and 5.0 or less. Specifically, the ratio may be 3.0 or more and 4.0 or less.

The step of respectively mixing the carbon raw material and the lithium compound may include dry mixing or wet mixing. Specifically, the mixing step may use a known mixer such as a stirring-type, rotary-type, or pneumatic-type mixer. For example, a mixing method such as mechanochemical treatment may be utilized to mix the carbon raw material and the lithium compound.

The step of respectively mixing the carbon raw material and the lithium compound may be performed at a mixing speed of 5.0 rpm to 50.0 rpm. Specifically, the mixing speed may be 20.0 rpm to 30.0 rpm.

In an embodiment, the step of thermally reducing the mixed powder may be performed in a temperature range of 860°C to 1,100°C. Specifically, the temperature range may be 860°C to 1,000°C, more specifically 880°C to 920°C, and even more specifically 895°C to 905°C.

When the temperature range exceeds the upper limit, there is a problem in that synthesized Li₂S powder sublimates and yield decreases. When the temperature range is below the lower limit, there is a problem in that the reaction is not sufficiently performed and raw materials remain.

In an embodiment, the step of thermally reducing the mixed powder may be performed for 2 hours or more. Specifically, the time may be 2 hours to 3 hours.

When the time range exceeds the upper limit, there is a problem in that process time and cost increase. When the time range is below the lower limit, there is a problem in that unreacted raw materials remain in the mixture of the carbon raw material and Li₂S.

The step of thermally reducing may be performed under a vacuum atmosphere. By performing the thermal reduction step under the vacuum atmosphere, by-products such as CO or CO₂ generated in a thermal reduction reaction process of the mixed powder of carbon and the lithium compound are rapidly discharged, thereby suppressing generation of oxides and increasing reaction uniformity of the mixed powder, and thus there is an advantage in that high-purity lithium sulfide can be produced.

In an embodiment, the vacuum atmosphere may be performed under a partial pressure condition of 1 × 10⁻³ Torr to 5 Torr. The partial pressure condition may be 1 × 10⁻³ Torr to 1 Torr.

When the partial pressure condition exceeds the upper limit, there is a problem in that a residual amount of oxides increases. When the partial pressure condition is below the lower limit, there is a problem in that equipment costs for depressurization increase.

After the step of mixing and thermally reducing the carbon raw material and the lithium compound, the method may include filtering a solution in which the thermally reduced carbon-lithium compound and a solvent are mixed, and drying the filtrate and then heat-treating the dried filtrate. Specifically, the mixed powder obtained from the heat treatment process is transferred to an extraction reactor under non-open-air conditions, and a solvent is mixed therewith to perform an extraction process.

The step of filtering the solution in which the thermally reduced carbon-lithium compound and the solvent are mixed may be a step of mixing the thermally reduced carbon-lithium compound, for example, C-Li₂S, together with the solvent. The solvent may include at least one of ethanol, methanol, isopropyl alcohol, ethylene glycol, and butyl alcohol.

In an embodiment, a mixing ratio of the solvent [L] to the carbon-lithium compound [g] may be 4 to 10. Specifically, the mixing ratio may be 6 to 8.

When the mixing ratio exceeds the upper limit, there is a problem of reduced economic efficiency due to excessive use of the solvent. When the mixing ratio is below the lower limit, there is a problem in that Li₂S powder is not sufficiently dissolved, thereby lowering an extraction rate.

The step of drying the filtrate and then heat-treating the dried filtrate is a step of heat-treating the filtered material to obtain final lithium sulfide (Li₂S). The step of drying the filtrate and then heat-treating the dried filtrate may be performed in a temperature range of 400°C to 800°C. Specifically, the temperature range may be 500°C to 800°C.

In an embodiment, the step of drying the filtrate and then heat-treating the dried filtrate may be performed by heat-treating at a temperature increase rate of 5°C to 20°C per minute for a maximum-temperature holding time of 1 hour to 6 hours, followed by natural cooling.

In the step of drying the filtrate and then heat-treating the dried filtrate, when the above-described temperature range exceeds the upper limit, there is a problem in that lithium sulfide is converted into lithium oxide. When the temperature range is below the lower limit, there is a problem in that the temperature is not sufficient to convert or remove lithium sulfide into lithium hydroxide or lithium carbonate, thereby lowering purity of lithium sulfide, which is the final product.

At this time, the step of drying the filtrate and then heat-treating the dried filtrate may be performed under an inert gas atmosphere. The inert gas atmosphere may include, for example, at least one of helium, neon, krypton, xenon, nitrogen, and argon.

The lithium sulfide thus prepared may be used as a raw material of a sulfide-based solid electrolyte.

Hereinafter, specific Examples of the present invention will be described. However, the following Examples are merely specific embodiments of the present invention, and the present invention is not limited to the following Examples.

### <Experimental Example 1>: Evaluation Example According to Mixture Shape Under Vacuum Atmosphere

### <Comparative Example 1>

As a carbon raw material (C), spent resistance material from an Acheson furnace of POSCO Future M was prepared. The powder-shaped carbon raw material (C) and lithium sulfate (Li₂SO₄) powder were mixed at a weight ratio of 3:1 such that the total amount was 40 g, and heat-treated at 900°C for 2 hours under vacuum (10⁻³ Torr), followed by natural cooling, thereby obtaining C+Li₂S, which is a powder-shaped carbon-lithium compound.

The carbon-lithium compound was mixed with ethanol as a solvent and then filtered, and the filtrate was dried. Thereafter, under an Ar atmosphere, which is an inert gas atmosphere, heat treatment was performed at 800°C at a temperature increase rate of 10°C per minute for a maximum-temperature holding time of 2 hours, followed by natural cooling, thereby preparing lithium sulfide (Li₂S).

### <Comparative Example 2>

The process was performed in the same manner as in Example 1, except that, in the step of thermally reducing the mixed powder of the carbon raw material and lithium sulfate, the powder-shaped carbon raw material (C) and lithium sulfate (Li₂SO₄) powder were mixed to have a weight ratio of 3:1, and the process was performed under atmospheric pressure conditions, rather than vacuum conditions, with an argon (Ar) flow of 0.5 LPM.

### <Example 1>

The process was performed in the same manner as in Comparative Example 1, except that, in the step of thermally reducing the mixed powder of the carbon raw material and lithium sulfate, the mixed powder was pelletized to have a size of 1 mm to 3 mm by adding water to the mixed powder of carbon and lithium sulfate and rotating the same, and then the reduction process was performed.

Specifically, in the step of adding water to the powder, water was specifically added at a ratio of 50 mL of water to 200 g of the powder, and the powder was rotated in a cylindrical apparatus to prepare pellets. At this time, the density of the pellets was measured by the Archimedes method, and it was confirmed that the density of the pellets was about 1.7 g/mL.

Table 1 below shows the weight ratio of carbon raw material (C) powder:lithium sulfate (Li₂SO₄) powder and process conditions in the thermal reduction process. Table 2 below shows an XRD peak intensity ratio (%) of C-Li₂S and an XRD peak intensity ratio (%) of lithium sulfide (Li₂S) prepared according to the process conditions of Table 1 below.

For XRD of the powder (C+Li₂S) after the thermal reduction step, a ratio of oxygen compounds was indicated based on the 2nd peak of lithium sulfide. The main XRD peaks of carbon and lithium sulfide are 26.61° and 27.0°, respectively, and since the peak value of carbon is very large, it is difficult to distinguish the two. Since a size ratio of the main peak to the 2nd peak is 100:23.6, the size of the main peak was assumed by dividing the size of the 2nd peak by 0.236. Based on the calculated value, peak size ratios of the remaining oxides were compared.

The XRD peak intensity ratios in Table 2 below were measured by a Theta-2theta mode method using an XRD diffraction analyzer.

**[Table 1]**

| Classification | Form | C:Li₂SO₄ Weight Ratio | Process condition | | | | |
|---|---|---|---|---|---|---|---|
| | | | Temperature (°C) | Time (hr) | Pressure | Partial Pressure [torr] | Ar flow |
| Comparative Example 1 | Mixed Powder | 3:1 | 900 | 2 | Vacuum | 10⁻³ | 0 |
| Comparative Example 2 | Mixed Powder | 3:1 | 900 | 2 | Atmospheric Pressure | - | 0.5LPM |
| Example 1 (Example 2) | Pellet | 3:1 | 900 | 2 | Vacuum | 10⁻³ | 0 |

**[Table 2]**

| Classification | (C+Li₂S) XRD peak Intensity Ratio (%, based on Li₂S 2^{nd} peak) | | | | Li₂S XRD peak Intensity Ratio (%, based on Li₂S 1^{st} peak) | | | |
|---|---|---|---|---|---|---|---|---|
| | Li₂CO₃ | Li₂O | Li₂SO₄ | Total | Li₂CO₃ | Li₂O | Li₂SO₄ | Total |
| Comparative Example 1 | 0 | 0.6 | 0.5 | 1.1 | 0 | 1.5 | 0 | 1.5 |
| Comparative Example 2 | 0 | 20 | 1.4 | 21.4 | 0 | 16.1 | 0 | 16.1 |
| Example 1 | 0 | 0.5 | 0 | 0.5 | 0 | 0.4 | 0 | 0.4 |

Referring to Tables 1 and 2, from Comparative Example 1 and Comparative Example 2, it was confirmed that the content of oxides was lower and the purity of lithium sulfide was higher when the pressure in the thermal reduction process condition was a vacuum condition than when the pressure was an atmospheric pressure condition. In addition, from Comparative Example 1 and Example 1, it was confirmed that the content of oxides was lower when the form of the carbon-lithium compound was a pellet form than when the form was a mixed powder.

### <Experimental Example 2>: Control of Process Conditions in Pellet Shape

### <Reference Example 1>

The process was performed in the same manner as in Example 1, except that powder having a C:Li₂SO₄ weight ratio of 2:1 was pelletized to a size of 1 mm to 3 mm by adding water to a mixed powder of carbon and lithium sulfate and rotating the same, and then the reduction process was performed.

### <Example 2>

The process was performed in the same manner as in Example 1, except that only pellets pelletized to a size larger than 1 mm by classifying powder size using a sieve were introduced and the reduction process was performed.

### <Example 3>

The process was performed in the same manner as in Example 1, except that only pellets pelletized to a size smaller than 1 mm by classifying powder size using a sieve were introduced and the reduction process was performed.

### <Example 4>

The process was performed in the same manner as in Example 1, except that the weight ratio of C:Li₂SO₄ was 4:1.

### <Reference Example 2>

The process was performed in the same manner as in Example 2, except that the process temperature was changed to 850°C.

### <Example 5>

The process was performed in the same manner as in Example 2, except that the process temperature was changed to 875°C.

### <Reference Example 3>

The process was performed in the same manner as in Example 2, except that the process time was changed to 1 hour.

### <Reference Example 4>

The process was performed in the same manner as in Example 2, except that the process time was changed to 1.5 hours.

Table 3 below shows the weight ratio of carbon raw material (C) powder:lithium sulfate (Li₂SO₄) powder and process conditions in the thermal reduction process, and Table 4 below shows an XRD peak intensity ratio (%) of C-Li₂SO₄ powder and an XRD peak intensity ratio (%) of lithium sulfide (Li₂S) prepared according to the conditions of Table 3 below.

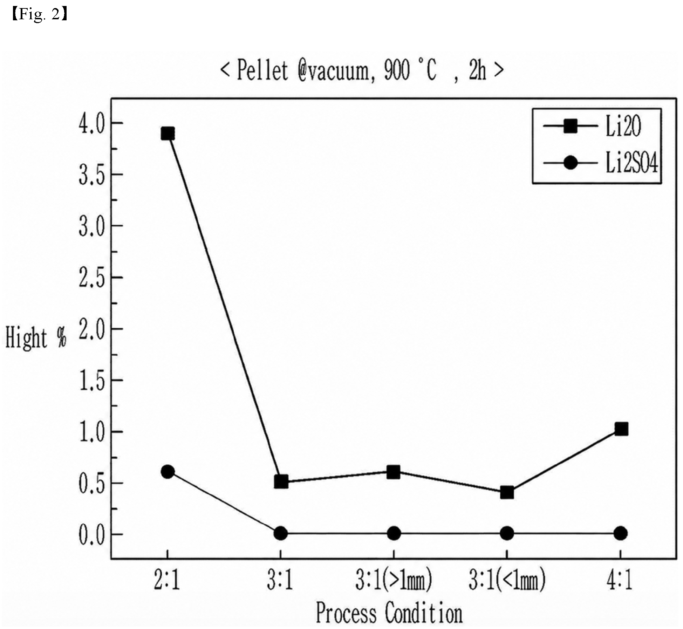

FIG. 2 illustrates an XRD result graph of a carbon-lithium compound having a pellet shape according to a mixing ratio of carbon and a lithium compound according to an embodiment of the present invention.

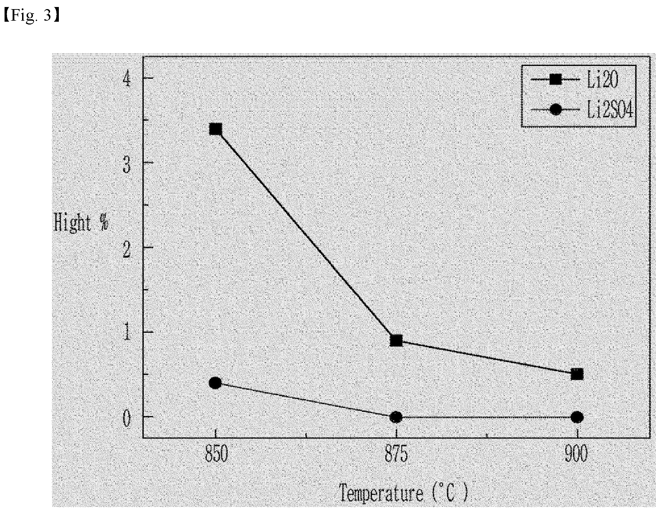

FIG. 3 illustrates an XRD result graph of a carbon-lithium compound having a pellet shape according to a process temperature according to an embodiment of the present invention.

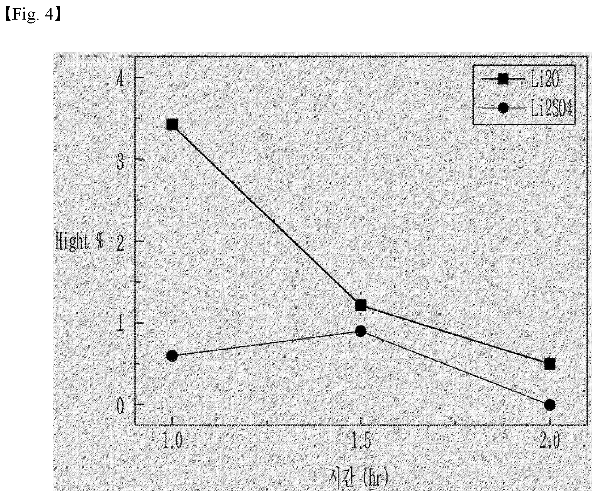

FIG. 4 illustrates an XRD result graph of a carbon-lithium compound having a pellet shape according to a process time according to an embodiment of the present invention.

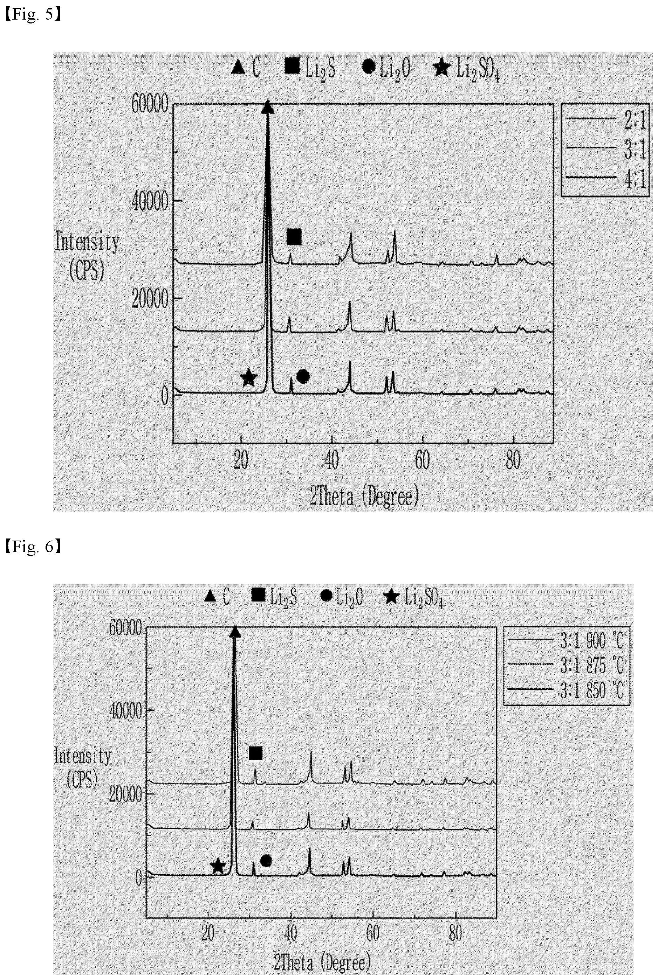

FIGS. 5 to 7 show XRD peak values of carbon-lithium compounds according to process conditions.

FIG. 5 shows XRD graphs according to weights of carbon and lithium compound in the carbon-lithium compound. Specifically, FIG. 5 sequentially shows, from the bottom, XRD peak values when weight ratios of carbon to lithium compound are 2:1, 3:1, and 4:1. More specifically, FIG. 5 shows XRD graphs of Reference Example 1, Example 2, and Example 4 of the present invention.

FIG. 6 shows XRD graphs according to process temperature. Specifically, FIG. 6 sequentially shows, from the bottom, XRD peak values when the process temperatures are 900°C, 875°C, and 850°C. More specifically, FIG. 6 shows XRD graphs of Example 2, Example 5, and Reference Example 2 of the present invention.

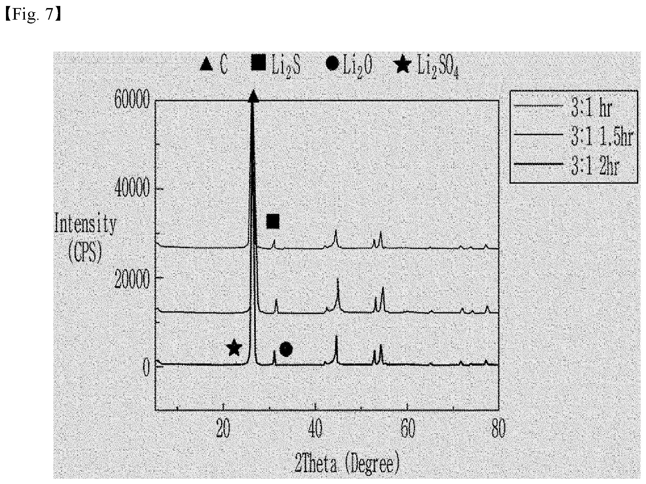

FIG. 7 shows XRD graphs according to process time. Specifically, FIG. 7 sequentially shows, from the bottom, XRD peak values when the process times are 1 hour, 1.5 hours, and 2 hours. More specifically, FIG. 7 shows XRD graphs of Reference Example 3, Reference Example 4, and Example 2 of the present invention.

**[Table 3]**

| Classification | Form | Pellet Size | C:Li₂SO₄ Weight Ratio | Process condition | | | |
|---|---|---|---|---|---|---|---|
| | | | | Temperature (°C) | Time (hr) | Pressure | Partial Pressure [torr] |
| Reference Example 1 | Pellet | >1 mm | 2:1 | 900 | 2 | Vacuum | 10⁻³ |
| Example 2 | Pellet | >1 mm | 3:1 | 900 | 2 | Vacuum | 10⁻³ |
| Example 3 | Pellet | <1 mm | 3:1 | 900 | 2 | Vacuum | 10⁻³ |
| Example 4 | Pellet | >1 mm | 4:1 | 900 | 2 | Vacuum | 10⁻³ |
| Reference Example 2 | Pellet | >1 mm | 3:1 | 850 | 2 | Vacuum | 10⁻³ |
| Example 5 | Pellet | >1 mm | 3:1 | 875 | 2 | Vacuum | 10⁻³ |
| Reference Example 3 | Pellet | >1 mm | 3:1 | 900 | 1 | Vacuum | 10⁻³ |
| Reference Example 4 | Pellet | >1 mm | 3:1 | 900 | 1.5 | Vacuum | 10⁻³ |

**[Table 4]**

| Classification | (C+Li₂S) XRD peak Intensity Ratio (%, based on Li₂S 2^{nd} peak) | | | | Li₂S XRD peak Intensity Ratio (%, based on Li₂S 1^{st} peak) | | | |
|---|---|---|---|---|---|---|---|---|
| | Li₂CO₃ | Li₂O | Li₂SO₄ | Total | Li₂CO₃ | Li₂O | Li₂SO₄ | Total |
| Reference Example 1 | 0 | 3.9 | 0.6 | 4.5 | 0.3 | 3.2 | 0 | 3.5 |
| Example 2 | 0 | 0.6 | 0 | 0.6 | 0 | 0.5 | 0 | 0.5 |
| Example 3 | 0 | 0.4 | 0 | 0.4 | 0 | 0.4 | 0 | 0.4 |
| Example 4 | 0 | 1.0 | 0 | 1.0 | 0 | 0.7 | 0 | 0.7 |
| Reference Example 2 | 0 | 3.4 | 0.4 | 3.8 | 0.3 | 2.8 | 0 | 3.1 |
| Example 5 | 0 | 0.9 | 0 | 0.9 | 0 | 1.0 | 0 | 1.0 |
| Reference Example 3 | 0 | 3.4 | 0.6 | 4.0 | 0.3 | 3.3 | 0 | 3.6 |
| Reference Example 4 | 0 | 1.5 | 0.9 | 2.4 | 0.2 | 2.1 | 0 | 2.3 |

Referring to Tables 3 and 4 and FIGS. 2 to 7, in Reference Example 1 and Examples 2 to 4, it was confirmed that, when the ratio of the carbon raw material in the carbon-lithium compound having a pellet shape was excessively low, the ratio of Li₂O was high and the reaction of Li₂SiO₄ was not completed. In Example 2, Example 5, and Reference Example 2, it was confirmed that, when the process temperature was as low as 850°C, the ratio of Li₂O was high and the reaction of Li₂SiO₄ was not completed. In Example 2 and Reference Examples 3 and 4, it was confirmed that the reaction was completed at a process time of 2 hours or more, and the ratio of residual oxides decreased.

The present invention is not limited to the above embodiments and/or Examples, and may be prepared in various different forms. A person having ordinary skill in the art to which the present invention pertains will understand that the present invention may be embodied in other specific forms without changing the technical spirit or essential features of the present invention. Therefore, the above-described embodiments and/or Examples should be understood as illustrative in all respects and not restrictive.

## Claims

1. A carbon-lithium compound, which is an intermediate product for preparing lithium sulfide powder and has a pellet shape,
the carbon-lithium compound comprising an oxide,
wherein the oxide is 1.0% or less based on a second XRD peak value of lithium sulfide (Li₂S).

2. The carbon-lithium compound of claim 1,
wherein the oxide does not comprise Li₂SO₄.

3. The carbon-lithium compound of claim 2,
wherein the oxide does not comprise Li₂CO₃.

4. The carbon-lithium compound of claim 1,
wherein the oxide comprises Li₂O, and
wherein the Li₂O is 1.0% or less based on the second XRD peak value of lithium sulfide (Li₂S).

5. The carbon-lithium compound of claim 1,
wherein the carbon-lithium compound has a size of 1 mm to 5.0 mm.

6. A method for preparing lithium sulfide, comprising:
mixing and thermally reducing a carbon raw material and a lithium compound,
wherein a carbon-lithium compound, which is a thermally reduced product, has a pellet shape.

7. The method for preparing lithium sulfide of claim 6,
wherein, in the mixing and thermally reducing of the carbon raw material and the lithium compound, a ratio of the carbon raw material to the lithium compound is 3.0 or more and 5.0 or less.

8. The method for preparing lithium sulfide of claim 6,
wherein the mixing and thermally reducing of the carbon raw material and the lithium compound is performed under a vacuum atmosphere.

9. The method for preparing lithium sulfide of claim 8,
wherein the vacuum atmosphere is performed under a partial pressure condition of 1 × 10⁻³ Torr to 5 Torr.

10. The method for preparing lithium sulfide of claim 6, further comprising, after the mixing and thermally reducing of the carbon raw material and the lithium compound:
filtering a solution in which the thermally reduced carbon-lithium compound and a solvent are mixed; and
drying the filtrate and then heat-treating the dried filtrate.

11. The method for preparing lithium sulfide of claim 6,
wherein, in the mixing and thermally reducing of the carbon raw material and the lithium compound, when the carbon raw material and the lithium compound are mixed, a pellet-shaped mixture having a size of 1 mm to 5.0 mm is formed.

12. The method for preparing lithium sulfide of claim 6,
wherein the mixing and thermally reducing of the carbon raw material and the lithium compound is performed in a temperature range of 860°C to 1,100°C.

13. The method for preparing lithium sulfide of claim 6,
wherein the carbon-lithium compound produced in the mixing and thermally reducing of the carbon raw material and the lithium compound comprises an oxide, and
wherein the oxide is 1.0% or less based on a second XRD peak value of lithium sulfide (Li₂S).

14. The method for preparing lithium sulfide of claim 13,
wherein the oxide comprises Li₂O, and
wherein the Li₂O is 1.0% or less based on the second XRD peak value of lithium sulfide (Li₂S).

15. The method for preparing lithium sulfide of claim 6,
wherein the oxide does not comprise Li₂SO₄.
